# EUROPÄISCHE PATENTSCHRIFT

(11) **EP 1 561 649 B1**
(45) Veröffentlichungstag und Bekanntmachung des Hinweises auf die Patenterteilung: **28.03.2007**
(21) Anmeldenummer: 05001472.9
(22) Anmeldetag: 25.01.2005
(51) Int. Cl.: B60R 21/26

(54) **Kaltgasgenerator**
Cold gas generator
Générateur de gaz froid

(30) Priorität: 06.02.2004 DE 202004001803 U
(43) Veröffentlichungstag der Anmeldung: 10.08.2005
(73) Patentinhaber: TRW Airbag Systems GmbH, 84544 Aschau am Inn (DE)
(72) Erfinder: Hofmann, Achim Dr., 84570 Polling (DE); Gabler, Michael, 84453 Mühldorf (DE); Seidl, Lorenz, 83562 Rechtmehring (DE)
(74) Vertreter: Kitzhofer, Thomas

(56) Entgegenhaltungen:
- EP-A- 1 336 538
- DE-U1- 20 313 993
- DE-U1- 20 319 564
- DE-U1-3202004 001 80
- US-B1- 6 217 064

## Beschreibung

Die Erfindung betrifft einen Kaltgasgenerator, mit einer mit Druckgas gefüllten Druckkammer, einer diese schließenden Membran, die mit einem Befestigungsrand an einer Trägerwand befestigt ist, und einem außerhalb der Druckkammer angeordneten Treibgas zur Zerstörung der Membran.

Derartige Kaltgasgeneratoren werden insbesondere bei Fahrzeuginsassen-Rückhaltesystemen verwendet. In der Druckkammer ist unter extrem hohem Druck gespeichertes Gas enthalten, das auf Zündung eines vorzugsweise außerhalb der Druckkammer angeordneten Treibsatzes hin ausströmt.

Die Erfindung betrifft insbesondere Kaltgasgeneratoren, die projektilfrei arbeiten, d.h. die Membran, die die Druckkammer schließt, wird nicht etwa durch ein Geschoß geöffnet, sondern durch die Verbrennungsprodukte des außerhalb angeordneten Treibsatzes, die gegen die Membran strömen und diese vorzugsweise mit so hohem Druck beaufschlagen, daß sie birst. Die Membran ist üblicherweise eine dünne Metallscheibe, die im Bereich ihres Randes (entweder am äußersten Rand oder nahe desselben) an einem Membranhalter auf einem geschlossenen Umfang angeschweißt ist. Die Membran ist vorzugsweise an einer Stirnseite des Membranhalters angeschweißt, und diese Stirnseite weist in Richtung Inneres der Druckkammer. Unter dem Druck des Gases wölbt sich die Membran üblicherweise nach außen. Wird beim Öffnen des Kaltgasgenerators dann jedoch von außen aufgrund des Treibsatzes ein hoher Druck auf die Membran ausgeübt, wird diese in Gegenrichtung, d.h. in Richtung Inneres der Druckkammer gewölbt. Dabei wird die Schweißnaht zusätzlich belastet, und zwar auf Zug.

Aus der US 6,217,064 B1 ist ein Kaltgasgenerator bekannt, dessen Membrane an einer Stützwand befestigt ist. Der Treibsatz ist innerhalb der Druckkammer angeordnet.

Aus der DE 203 13 993 U1 ist ein gattungsgemäßer Kaltgasgenerator bekannt, bei dem der Zünder zum Zerstören der Membrane außerhalb des Druckgasbehälters angeordnet ist. Die Membrane ist an einem Membranhalter befestigt.

Aufgabe der Erfindung ist es, die Schweißnahtbelastung herabzusetzen.

Dies wird bei einem Kaltgasgenerator der eingangs genannten Art durch eine Stützwand erreicht, die sich radial einwärts des Befestigungsrandes der Membran in solch unmittelbarer Nähe zur Innenseite der Membran befindet, daß beim Aufbringen eines außenseitigen Drucks auf die Membran sich diese in Richtung nach innen verformt und sich vor ihrer Zerstörung an der Stützwand anlegt. Mit dem Begriff "Außen-" bzw. "Innenseite" sind die bezogen auf die Druckkammer nach außen bzw. nach innen weisenden beiden Seiten der Membran gemeint. Wenn sich also die Membran aufgrund des Druckes durch einen Treibsatz in Richtung Inneres der Druckkammer deformiert, hilft die Stützwand, einen Teil dieses auf die Schweißnaht aufgebrachten Druckes abzufangen. Die Membran kann sich also nur radial einwärts des umlaufenden Befestigungsrandes um eine vorbestimmte Strecke in die Gegenrichtung verformen. Damit wird verhindert, daß die Schweißnaht reißt, was zu fliegenden Membranbruchstücken führen könnte. Darüber hinaus wird indirekt erreicht, daß die Membran nicht von außen, sondern vom Zentrum aus aufbricht. Um nachvollziehen zu können, daß die Membran tatsächlich kurz vor ihrem Zerstören an die Stützwand gelangt, muß nur ein zunehmend, sich ggf. langsam steigernder Druck von außen auf die Membran aufgebracht werden. Durch diese vergleichsweise langsame Druckerhöhung (verglichen mit der abrupten Druckerhöhung bei Zündung eines Treibsatzes) wird sich die Position der Membran zur Stützwand kurz vor Zerstörung der Membran bestimmen lassen.

Ein weiterer Vorteil der Erfindung besteht darin, daß das Öffnungsverhalten und der Gasdruck in engen Grenzen vorbestimmt werden können.

Die Trägerwand ist vorzugsweise ein separater Membranhalter, der an dem Rand des Druckgasbehälters befestigt ist, insbesondere angeschweißt wird.

Gemäß einer Ausgestaltung ist auch vorgesehen, daß die Stützwand ein gegenüber dem Membranhalter separates Teil ist.

Die Stützwand kann zwar durch ein separates Einlegeteil, das in das Innere der Druckkammer ragt, gebildet sein. Eine andere Ausführungsform hingegen sieht vor, daß der Druckgasbehälter selbst eine ringförmige Einbuchtung besitzt, die die Stützwand bildet. Durch letztere Ausführungsform lassen sich Teile sparen.

Die Einbuchtung sollte insbesondere nahe eines nach außen ragenden Öffnungsrandes des Druckgasbehälters vorgesehen sein, wogegen der Membranhalter am Öffnungsrand befestigt ist.

Die Membran ist insbesondere an der Trägerwand mit ihrer Außenseite angeschweißt.

Damit der Kontakt mit der Stützwand nicht zum Zerreißen der Membran im Bereich der entstehenden Anlagefläche führt, sollte die Stützwand vorzugsweise abgerundet sein.

Diesbezüglich hat sich überraschenderweise herausgestellt, daß es eine gewisse Relation zwischen der Dicke der Membran und dem Radius der Stützwand gibt, gemessen im Querschnitt der Stützwand. Der Radius der Stützwand im Anlagebereich sollte wenigstens achtmal, vorzugsweise wenigstens zehnmal größer als die Membrandicke sein.

Im Ausgangszustand, vor dem Aufbringen eines außenseitigen Drucks, ist die Membran von der Stützwand durch einen Spalt beabstandet. Das bedeutet, beim Aufbringen des Drucks gibt es keine kontinuierliche, immer größer werdende Anlagefläche der Membran an der Stützwand, sondern zuerst muß der Spalt überwunden werden, bis es zur Anlage kommt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine erste Ausführungsform des erfindungsgemäßen Kaltgasgenerators,
- Figur 2 eine vergrößerte Schnittansicht des Kaltgasgenerators nach Figur 1 im Bereich des Membranhalters im nicht aktivierten Zustand des Treibsatzes,
- Figur 3 eine Ansicht entsprechend Figur 2, kurz vor dem Zerstören der Membran,
- Figur 4 eine Längsschnittansicht durch einen Kaltgasgenerator gemäß einer zweiten Ausführungsform, und
- Figur 5 eine Längsschnittansicht durch einen Kaltgasgenerator gemäß einer dritten Ausführungsform.

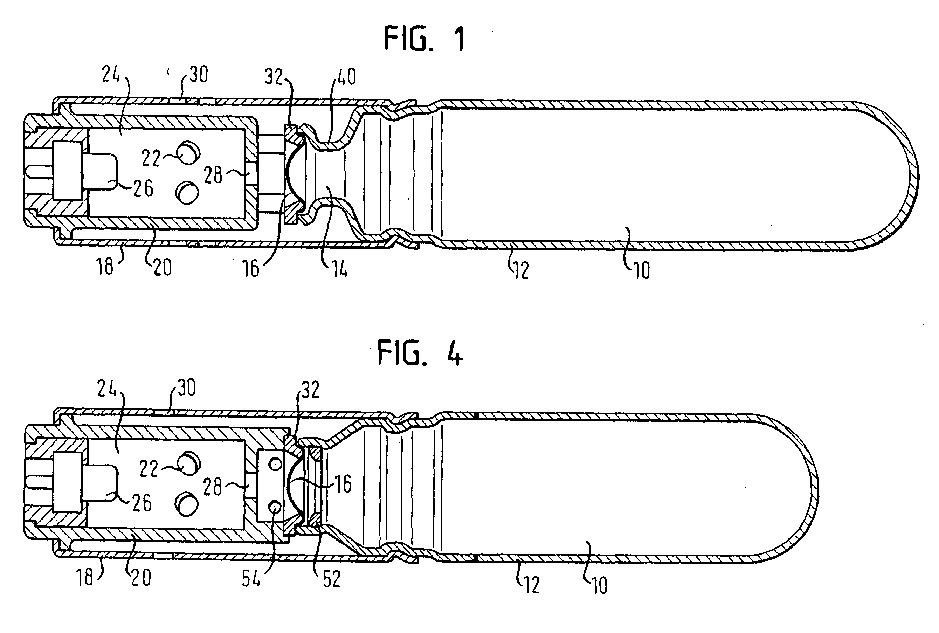

In Figur 1 ist ein Kaltgasgenerator zum Aufblasen eines nicht dargestellten Gassacks für ein Fahrzeuginsassen-Rückhaltesystem dargestellt. Der Kaltgasgenerator hat eine mit Druckgas gefüllte Druckkammer 10, die durch einen flaschenförmigen Druckgasbehälter 12 begrenzt ist. Der Druckgasbehälter 12 hat eine stirnseitige Ausströmöffnung 14, die durch eine Membran 16 geschlossen ist. Eine zylindrische Außenwand 18 ist durch Crimpen an dem Druckgasbehälter 12 befestigt und beherbergt einen Einsatz 20 mit einer mit einem pyrotechnischen Treibsatz 22 gefüllten Brennkammer 24 und einen Zünder 26 zum Zünden des Treibsatzes 22.

Der Einsatz 20 hat auf einer der Membran 16 zugewandten Stirnseite eine Ausströmöffnung 28 für entstehendes Druckgas, das gegen die Membran 16 beim Aktivieren des Gasgenerators strömt. Zwischen dem Einsatz 20 und der zylindrischen Wand 18 liegt ein ringförmiger Ausströmraum für entstehendes Mischgas aus der Druckkammer 10 und dem Heißgas aus der Brennkammer 24, das über Ausströmöffnungen 30 den Gasgenerator verlassen kann.

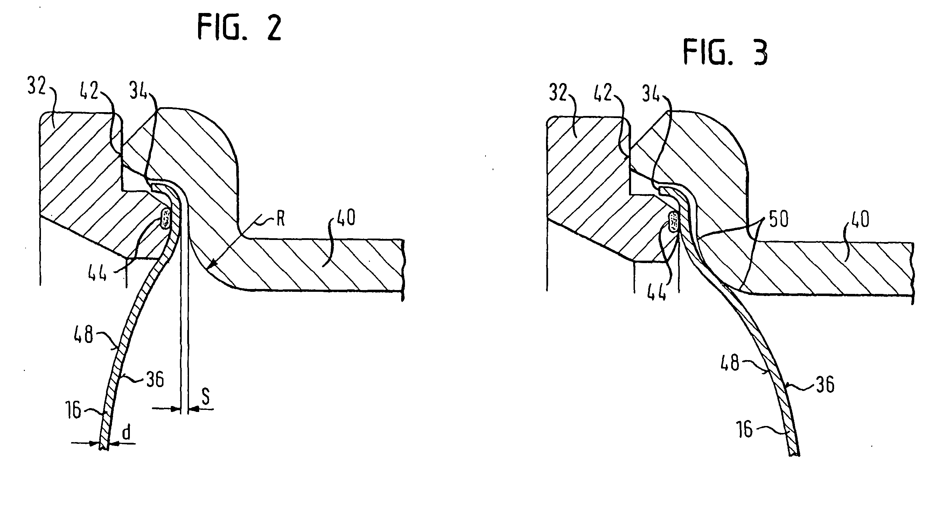

Die Membran 16 ist an einem ringförmigen Membranhalter 32 angeschweißt (siehe Figur 2) und zwar nahe seines Außenumfangs 34, jedoch beabstandet von diesem entlang eines Befestigungsrandes 44. Die Membran 16 ist an dem Membranhalter 32 mit der Außenseite 48 angeschweißt, vorzugsweise durch Kondensatorentladungsschweißen. Der Membranhalter 32 bildet die Trägerwand für die Membran 16. Die Membran 16 kann am und radial außerhalb des Befestigungsrandes 44 an dem die Stützwand bildenden Teil zwar im Ausgangszustand anliegen, nicht jedoch im beweglichen, radial einwärts des Befestigungsrandes 44 liegenden Abschnitts der Membran 16. Auf diesen Abschnitt kommt es vorliegend bezüglich der Anlage beim Aufbringen des Drucks an.

Der Druckgasbehälter 12 ist im Bereich der Ausströmöffnung 14 radial einwärts umgeformt und zwar um die Membran 16 im Bereich ihres Befestigungsrandes 44 (Anschweißstelle) herum. Hierzu hat der Druckgasbehälter 12 eine ringförmige Einbuchtung 40.

Der Membranhalter 32 ist an eine Stirnseite 42 des Druckgasbehälters 12 im Bereich von dessen Öffnungsrand angeschweißt.

Wie Figur 2 zu entnehmen ist, führt der Druck im Inneren des Druckgasbehälters 10 zu einem Ausbeulen der Membran 16 nach außen, so daß diese nicht nur an ihrem ringförmigen Befestigungsrand 44 (siehe Figuren 2 und 3), sondern auch radial einwärts desselben an dem Membranhalter 32 anliegt.

Die Membran 16 ist radial einwärts des Befestigungsrandes 44 und im nicht aktivierten Zustand des Gasgenerators von der Innenseite der Einbuchtung 40 beabstandet. Es ergibt sich ein Schlitz S von etwa 0,2 mm Breite im Bereich des Befestigungsrandes 44, die radial einwärts hin zunimmt. Von dem Befestigungsrand 44 radial einwärts aus besitzt die Innenseite der Einbuchtung 40 einen im Querschnitt gleichmäßigen Radius R, der mindestens acht-, vorzugsweise mindestens zehnmal so groß ist wie die Dicke d der Membran 16.

Wird der Zünder 26 aktiviert, so verbrennt der Treibsatz 22, und das entstehende heiße Gas strömt über die Öffnung 28 gegen die Außenseite 48 der Membran 16, so daß diese in Richtung Inneres der Druckkammer 10 deformiert wird (siehe Figur 3), da der Druck auf der Außenseite 48 größer als auf der Innenseite 36 ist. Die Membran 16 legt sich dabei, bevor sie reißt, an die Innenseite der Einbuchtung 40 an, die in diesem Bereich eine Stützwand 50 für die Membran 16 bildet. In diesem Bereich, der die Stützwand 50 definiert, wird ein Teil der auf die Membran 16 ausgeübten Kraft abgefangen, und diese Kraft wird nicht in die Schweißnaht im Bereich des Befestigungsrandes 44 eingeleitet, so daß diese entlastet wird. Die Stützwand 50 ist folglich ein Wandabschnitt, der im Ausgangszustand von dem beweglichen Teil der Membran 16 beabstandet ist.

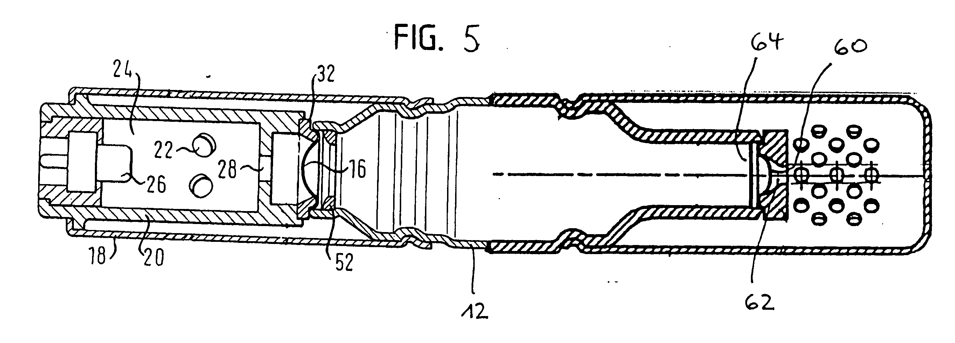

Die Stützwand 50 muß nicht durch eine Einbuchtung 40, also einen einstückigen Abschnitt des Druckgasbehälters 12 gebildet sein. Es ist auch möglich, wie es in Figur 4 dargestellt wird, einen Blendenring 52 innenseitig am Druckgasbehälter 12 zu befestigen, so daß dieser Blendenring 52 die Stützwand für die Membran 16 bildet, an der sie sich nach Aktivierung des Zünders 26 anlegt. Selbstverständlich ist auch hier die Innenseite der Stützwand wie in Figur 2 mit einer entsprechenden Rundung versehen.

Bei der in Figur 4 dargestellten alternativen Ausführungsform stößt im übrigen der Einsatz 20 an den Membranhalter 32 an und ist in einer stirnseitigen Nut positioniert. Radiale Ausströmöffnungen 54 im Einsatz erlauben einen Teil des entstehenden heißen Gases und des Druckgases, in den Ausströmraum zwischen der zylindrischen Wand 18 und dem Einsatz 20 zu gelangen.

Die Stützwand in Form des Blendenrings 52 muß nicht zwingend im Bereich des Befestigungsrandes 44 von der Membran 16 beabstandet sein. Es wäre auch denkbar, im Bereich des Befestigungsrandes 44 drei Teile miteinander zu verschweißen, beispielsweise auch mittels Kondensatorentladungsschweißen, nämlich den Membranhalter 32, die Membran 16 und den Blendenring 52, der sich radial einwärts des Befestigungsrandes 44, d.h. der Schweißnaht, in Richtung von der Brennkammer 14 und der Membran 16 entfernt, wie dies in den Figuren 2 und 3 dargestellt ist, damit die Membran 16 erst bei Aufbringen eines hohen Drucks auf der Außenseite 48 an der Stützwand anliegt.

Wie man den Figuren deutlich entnehmen kann, ist die Membran 16 auf beiden axialen Stirnseiten in ihrem beweglichen Mittenabschnitt abgestützt. Im Ausgangszustand liegt die Membran 16 an einem abgerundeten Anlageabschnitt radial einwärts des Befestigungsrandes 44 am Membranhalter an. Beim Aufbringen des Druckes legt sich die Membran 16 dann an die Stützwand 50 an.

Die Ausführungsform nach Figur 5 zeigt einen Generator, der an dem dem Zünder 26 entgegengesetzten Ende den Gasauslaß besitzt. Der Druckgasbehälter 12 hat hier seine durch einen Membranverschluß 60 verschlossene Ausströmöffnung 62. Vor dem Membranverschluß 60 sitzt ein Sieb 64. Das Zerstören des Membranverschlusses 60 erfolgt durch die Schockwelle , die beim Zerstören der Membran 16 erzeugt wird und den Druckgasbehälter 12 durchläuft. Das Fragment der Membran 16 legt sich also nach dem Öffnen an die Stützwand 50 an.

## Patentansprüche

1. Kaltgasgenerator, mit einer mit Druckgas gefüllten Druckkammer (10),
einer diese schließenden Membran (16), die mit einem Befestigungsrand (44) an einer Trägerwand befestigt ist, und
einem außerhalb der Druckkammer (10) angeordneten Treibsatz (22) zur Zerstörung der Membran (16),
**gekennzeichnet durch**
eine Stützwand (50), die sich radial einwärts des Befestigungsrands (44) in solch unmittelbarer Nähe zur Innenseite (36) der Membran (16) befindet, daß beim Aufbringen eines außenseitigen Druckes auf die Membran (16) sich diese in Richtung nach innen verformt und sich vor ihrer Zerstörung an der Stützwand (50) anlegt.

2. Kaltgasgenerator nach Anspruch 1, **dadurch gekennzeichnet, daß** die Trägerwand ein separater Membranhalter (32) ist.

3. Kaltgasgenerator nach Anspruch 2, **dadurch gekennzeichnet, daß** der Membranhalter (32) an einem Rand eines die Druckkammer (10) enthaltenden Druckgasbehälters (12) befestigt ist.

4. Kaltgasgenerator nach Anspruch 2 oder 3, **dadurch gekennzeichnet, daß** der Membranhalter (32) an einem die Druckkammer (10) enthaltenden Druckgasbehälter (12) angeschweißt ist.

5. Kaltgasgenerator nach einem der Ansprüche 2 bis 4, **dadurch gekennzeichnet, daß** die Stützwand (50) ein gegenüber dem Membranhalter (32) separates Teil ist.

6. Kaltgasgenerator nach einem der vorhergehenden Ansprüche, **dadurch gekennzeichnet, daß** ein die Druckkammer (10) enthaltender Druckgasbehälter (12) eine ringförmige Einbuchtung (40) hat, die die Stützwand (50) bildet.

7. Kaltgasgenerator nach einem der Ansprüche 2 bis 5 und zusätzlich nach Anspruch 6, **dadurch gekennzeichnet, daß** die Einbuchtung (40) nahe eines nach außen ragenden Öffnungsrandes des Druckgasbehälters (12) vorgesehen und der Membranhalter (32) am Öffnungsrand befestigt ist.

8. Kaltgasgenerator nach einem der vorhergehenden Ansprüche, **dadurch gekennzeichnet, daß** die Membran (16) an ihrer Außenseite (48) an der Trägerwand angeschweißt ist.

9. Kaltgasgenerator nach einem der vorhergehenden Ansprüche, **dadurch gekennzeichnet, daß** die Stützwand (50) im Anlagebereich der Membran (16) abgerundet ist.

10. Kaltgasgenerator nach einem der vorhergehenden Ansprüche, **dadurch gekennzeichnet, daß** die Stützwand (50) im Anlagebereich und im Querschnitt gesehen einen Radius (R) hat, der wenigstens achtmal größer als die Membrandicke (d) ist.

11. Kaltgasgenerator nach einem der vorhergehenden Ansprüche, **dadurch gekennzeichnet, daß** die Stützwand (50) ein separates, mit dem Druckgasbehälter (12) gekoppeltes Teil ist.

12. Kaltgasgenerator nach einem der vorhergehenden Ansprüche, **dadurch gekennzeichnet, daß** die Stützwand (50) im Ausgangszustand, vor dem Aufbringen eines außenseitigen Drucks, von der Membran (16) durch einen Spalt beabstandet ist.

## Claims

1. A cold gas generator comprising a pressure chamber (10) filled with pressurized gas,
a diaphragm (16) that closes the pressure chamber and has an attachment edge (44) that is attached to a carrier wall, and
a propellant charge (22) arranged outside the pressure chamber (10) for destroying the diaphragm (16), ,
**characterized by**
a support wall (50), which is situated radially inwards from the attachment edge (44) in such immediate vicinity to the interior side (36) of the diaphragm (16) that when an exterior-side pressure is exerted upon it, the diaphragm (16) is deformed towards the interior and makes contact with the support wall (50) before being destroyed.

2. The cold gas generator as recited in claim 1, **characterized in that** the carrier wall is a separate diaphragm holder (32).

3. The cold gas generator as recited in claim 2, **characterized in that** the diaphragm holder (32) is attached to an edge of a pressurized-gas container (12) that contains the pressure chamber (10).

4. The cold gas generator as recited in claim 2 or 3, **characterized in that** the diaphragm holder (32) is welded to a pressurized-gas container (12) that contains the pressure chamber (10).

5. The cold gas generator as recited in any of claims 2 to 4, **characterized in that** the support wall (50) is a separate part with respect to the diaphragm holder (32).

6. The cold gas generator as recited in any of the preceding claims, **characterized in that** a pressurized-gas container (12) containing the pressure chamber (10) has an annular indentation (40), which forms the support wall (50).

7. The cold gas generator as recited in any of claims 2 to 5 and in addition as recited in claim 6, **characterized in that** the indentation (40) is provided close to an opening edge of the pressurized-gas container (12) that projects outwards, and the diaphragm holder (32) is attached to the opening edge.

8. The cold gas generator as recited in any of the preceding claims, **characterized in that** the diaphragm (16) is welded on its exterior side (48) to the carrier wall.

9. The cold gas generator as recited in any of the preceding claims, **characterized in that** the support wall (50) is rounded in the contact area of the diaphragm (16).

10. The cold gas generator as recited in any of the preceding claims, **characterized in that** in the contact area the support wall (50), viewed in cross-section, has a radius (R) that is at least eight times greater than the diaphragm thickness (d).

11. The cold gas generator as recited in any of the preceding claims, **characterized in that** the support wall (50) is a separate part that is coupled to the pressurized-gas container (12).

12. The cold gas generator as recited in any of the preceding claims, **characterized in that** in the initial state, before an exterior-side pressure is exerted, the support wall (50) is spaced apart from the diaphragm (16) by a gap.

## Revendications

1. Générateur de gaz froid, comportant une chambre de pression (10) remplie de gaz sous pression,
une membrane (16) qui ferme cette chambre de pression et est fixée par un bord de fixation (44) sur une paroi de support (16),
une charge propulsive (22) agencée en dehors de la chambre de pression (10) pour détruire la membrane (16),
**caractérisé par**
une paroi de soutien (50) qui se trouve radialement vers l'intérieur du bord de fixation (44) à une proximité directe telle de la face intérieure (36) de la membrane (16) que lorsqu'on exerce une pression depuis l'extérieur sur la membrane (16), celle-ci se déforme en direction de l'intérieur et prend appui avant sa destruction sur la paroi de soutien (50).

2. Générateur de gaz froid selon la revendication 1, **caractérisé en ce que** la paroi de support est un appui de membrane (32)

3. Générateur de gaz froid selon la revendication 2, **caractérisé en ce que** l'appui de membrane (32) est fixé sur un bord d'un réservoir de gaz sous pression (12) contenant la chambre de pression (10).

4. Générateur de gaz froid selon la revendication 2 ou 3, **caractérisé en ce que** l'appui de membrane (32) est soudé sur un bord d'un réservoir de gaz sous pression (12) contenant la chambre de pression (10).

5. Générateur de gaz froid selon l'une des revendications 2 à 4, **caractérisé en ce que** la paroi de soutien (50) est une pièce séparée par rapport à l'appui de membrane (32).

6. Générateur de gaz froid selon l'une des revendications précédentes, **caractérisé en ce que** un réservoir de gaz sous pression (12) contenant la chambre de pression (10) a un creux annulaire (40) qui forme la paroi de soutien (50).

7. Générateur de gaz froid selon l'une des revendications 2 à 5, et additionnellement selon la revendication 6, **caractérisé en ce que** le creux (40) est prévu à proximité d'un bord d'ouverture, faisant saillie vers l'extérieur, du réservoir de gaz sous pression (12), et l'appui de membrane (32) est fixé sur le bord d'ouverture.

8. Générateur de gaz froid selon l'une des revendications précédentes, **caractérisé en ce que** la membrane (16) est soudée sur sa face extérieure (48) à la paroi de support.

9. Générateur de gaz froid selon l'une dés revendications précédentes, **caractérisé en ce que** la paroi de soutien (50) est arrondie dans la région d'appui de la membrane (16).

10. Générateur de gaz froid selon l'une des revendications précédentes, **caractérisé en ce que** dans la région d'appui et vue en section transversale, la paroi de soutien (50) a un rayon (R) qui est au moins huit fois supérieur à l'épaisseur de membrane (d).

11. Générateur de gaz froid selon l'une des revendications précédentes, **caractérisé en ce que** la paroi de soutien (50) est une pièce séparée accouplée au réservoir de gaz sous pression (12).

12. Générateur de gaz froid selon l'une des revendications précédentes, **caractérisé en ce que** dans l'état initial, la paroi de soutien (50) est espacée de la membrane (16) avant qu'une pression soit exercée depuis l'extérieur.
